# EUROPÄISCHE PATENTSCHRIFT

(11) **EP 0 776 254 B1**
(45) Veröffentlichungstag und Bekanntmachung des Hinweises auf die Patenterteilung: **16.02.2000**
(21) Anmeldenummer: 94928336.0
(22) Anmeldetag: 13.09.1994
(51) Int. Cl.: B05B 15/04, B29C 71/00, B29C 59/08

(54) **VERWENDUNG EINER BEI DER DURCHFÜHRUNG VON FARBAUFTRAGSARBEITEN AUF EINE FARBZUBEHANDELNDE GRUNDFLÄCHE AUFBRINGBARE KUNSTSTOFF-FOLIE ALS FLÄCHENBEGRENZENDES ABDECKMITTEL**
USE OF PLASTIC FILM TO MASK PARTS OF THE SURFACE OF A SUBSTRATE BEFORE PAINT IS APPLIED
UTILISATION D'UN FILM PLASTIQUE APPLICABLE SUR UNE SURFACE DE BASE A PEINDRE, UTILISE COMME ELEMENT DE RECOUVREMENT DELIMITANT UNE SURFACE, LORS DE TRAVAUX D'APPLICATION DE PEINTURE

(43) Veröffentlichungstag der Anmeldung: 04.06.1997
(73) Patentinhaber: PERGAPLASTIC GMBH, 74731 Walldürn-Altheim (DE); VOSSCHEMIE GmbH, D-25436 Uetersen (DE)
(72) Erfinder: PAUL, Fritz, D-74731 Walldürn-Altheim (DE); SCHICKTANZ, Uwe, D-74731 Walldürn-Altheim (DE); VOSS, Klaus-Wilhelm, D-25436 Uetersen (DE)
(74) Vertreter: Richter, Werdermann & Gerbaulet
(86) Internationale Anmeldenummer: EP9403046
(87) Internationale Veröffentlichungsnummer: WO9608318

(56) Entgegenhaltungen:
- EP-A- 0 409 465
- WO-A-94/08779
- DE-A- 4 016 210
- DE-A- 4 133 634
- FR-A- 2 519 883
- GB-A- 2 200 359
- US-A- 4 622 237

## Beschreibung

Die Erfindung betrifft die Verwendung einer bei der Durchführung von Farbauftragsarbeiten auf eine farbzubehandelnde Grundfläche aufbringbare Kunststoff-Folie als flächenbegrenzendes Abdeckmittel.

Kunststoff-Folie, insbesondere Polyethylen, wird u.a. in der Verpackungsindustrie verwendet und ist in der ursprünglichen Farbe meist transparent bis milchig-trüb/weiß. Weiches oder Hochdruck-Polyethylen ist flexibel, unzerbrechlich, zäh und hat eine wachsartige Oberfläche, die über eine sehr niedrige Oberflächenspannung verfügt. Deshalb muß diese Oberfläche vor dem Aufbringen eines Farbauftrages vorbehandelt werden, um eine ausreichende Benetzbarkeit und Farbhaftung zu erreichen.

Die FR-A-251 883 offenbart die Verwendung einer einseitig durch Beflammung mit einer sauerstoffarmen Flamme oberflächenbehandelten Kunststoff-Folie mit durch die Beflammung polarisierter Oberfläche zur Erhöhung der Klebemittelhaftung, als bahnförmiges ausgebildetes Abdeckmittel für auf einen Untergrund aufzubringendes Auftragsmittel zur Abdeckung von zu schützenden Flächen und zur Begrenzung von auftragsmittelfreien Flächen. Die hier eingesetzte Kunststoff-Folie besteht aus einem mit einer Haftschicht versehenen Kunststoffträger, der aus einer zweiseitig ausgerichteten Kunststoff-Folie besteht, deren eine Seite eine lineare Oberflächenspannung zwischen 4 x 10⁻⁴ N/cm und 5,5 x 10⁻⁴ N/cm und deren andere Seite eine lineare Oberflächenspannung in der Größenordnung von 3 x 10⁻⁴ N/cm bis 3,5 x 10⁻⁴ N/cm aufweist und die mit einem Haftmittel versehen ist, das sich auf mindestens einem Teil der Vorderseite des Trägers mit höchster Oberflächenspannung befindet. Die beiden Oberflächen dieser Abdeckfolie weisen danach unterschiedliche Oberflächenspannungen auf und auf der Oberfläche mit der größten Oberflächenspannung befindet sich die Haftschicht. Die Haftung eines Farben- oder Lackauftrages auf die Oberfläche mit der niedrigsten Oberflächenspannung ist nicht sehr groß, was darauf zurückzuführen ist, daß bei der Oberflächenaktivierung der Folie durch eine thermische Behandlung mit einer sauerstoffsarmen Flamme sich nur wenige Sauerstoffmoleküle an die Folienoberfläche anlagern können, zumal der Grad der Haftungseigenschaften nur durch eine Oberflächenpolarisierung durch Anlagerung sauerstoffhaltiger Gruppen (OH,COOH,= C = O) bestimmt wird. Nur mit einer sauerstoffarmen Flamme behandelte Folienoberflächen führen zu keinen langlebigen Oberflächenspannungen. Eine im Laute der Zeit sich verringende Oberflächenspannung wirkt einer Farb- oder Lackhaftung entgegen.

Der US-A-4,622,237 ist ein Verfahren zur Behandlung der Oberflächen von Gegenständen aus Kunststoff, Harzen, Gummi, Papier, Pappe oder Metall zu entnehmen, wobei die Behandlung der Oberflächen mit einer elektrisch angeregten Flamme eines brennenden Gasgemisches vorgenommen wird. Die Oberflächenaktivierung der Gegenstände erfolgt dabei mit einer mit Sauerstoff angereicherten Oxydationsflamme, wobei jedoch immer ein Gemisch aus Luft und Kohlenwasserstoffgas eingesetzt wird, welches mit reinem Sauerstoff angereichert ist. Da auch Blechtafeln aus Aluminium oder Weißblech oberflächenaktiviert werden sollen, sind diese Gegenstände in keiner Weise als Abdeckfolien bei Lackierarbeiten an Karosserieflächen einsetzbar. Die Aktivierung von Oberflächen von Kunststoff-Folien aus Polyethylen mit hoher Dichte (HDPE) ist nicht vorgesehen, denn nur Polyethylene mit hoher Dichte (HDPE) sind oberflächenaktivierbar, um eine erhöhte Haftung zu erzielen, denn bei einer Kunststoff-Folie ist diese Art der Aktivierung und Erzielung einer erhöhten Haftung nur dann möglich, wenn eine Oberflächenpolarisierung durch Anlagerung sauerstoffhaltiger Gruppen (OH, COOH, = C=O) vorgenommen wird. Eine derartige Oberflächenpolarisierung ist bei Blechtafeln aus Aluminium oder Weißblech und bei Gegenständen aus Harzen, Gummi, Papier und Pappe nicht möglich, da die hier eingesetzten Materialien keine Anlagerung sauerstoffhaltiger Gruppen ermöglichen und somit eine Oberflächenaktivierung nicht erfolgt.

Die GB-A-22 00 359 beschreibt eine Anstrich- oder Lackiermaske, beispielsweise eine an einem Kraftfahrzeug oder einem Kraftfahrzeugteil während des Lackiervorgangs anzubringende Maske, sowie ein Verfahren zur Herstellung und Einsatz einer derartigen Maske. Die hierbei eingesetzte Kunststoff-Folie ist auf mindestens einer ihrer Oberflächen einem Glimmentladungsprozeß unterworfen. Die hier eingesetzte Kunststoff-Folie besteht aus mindestens 45 Gewichtsprozent eines Linearpolyethylens (LLDPE) 10 bis 50 Gewichtsprozent eines Polyethylens (HDPE) hoher Dichte, 0,5 bis 10 Gewichtsprozent Polyethylen (LDPE) geringer Dichte, 0,1 bis 5 Gewichtsprozent Oleamide, Erucamide oder Natursilika und bis zu etwa 5 Gewichtsprozent Fettsäureester, Farbstoffe, synthetische Silika, Stabilisatoren und Verarbeitungshilfsstoffen, wobei jedoch ein Polyethylen hoher Dichte mit 10 bis 15 Gewichtsprozent eingesetzt werden kann. Titandioxid wird jedoch in Verbindung mit der eingesetzten Kunststoff-Folie nicht verwendet. Die Herstellung der Anstrich- oder Lackiermaske sieht vor, die Intensität der Vorbehandlung der Kunststoff-Folie so einzustellen, daß nach Ablauf von 6 Monaten nach der Vorbehandlung noch eine Oberflächenspannung von mindestens 45 dyn/cm vorhanden sein soll, was jedoch voraussetzt, daß anfangs eine sehr hohe Oberflächenspannung vorliegen muß, die dann innerhalb der 6 Monate auf 45 dyn/cm abfällt. Das bekannte Verfahren schließt jedoch nicht eine Kunststoff-Folie so auszubilden, daß sich nach einem Zeitraum von 12 Monaten eine unveränderbare Oberflächenspannung von mindestens 48 dyn/cm einstellt.

Neben dem Kreidler-Verfahren,das mit einer Gasflamme mit Sauerstoffüberschuß arbeitet und hauptsächlich zur Oberflächenbehandlung von Formkörpern, wie z.B. Flaschen,eingesetzt wird, ist eine ebenfalls oxidierend wirkende Oberflächenbehandlung durch das Corona-Verfahren, wie in der DE-A-3537614 und der DE-A-3045259 beschrieben, bekannt, bei dem die Folienbahn durch einen durch Hochspannung erzeugten Lichtbogen (Corona) geführt wird,wobei die elektrische Spannung so stark sein muß,daß eine kontinuierliche Hochspannungsentladung zwischen den Elektroden zustande kommt.

Durch die Corona-Behandlung wird die Oberfläche der Kunststoff-Folie durch Ausbildung polarer Gruppen auf der Oberfläche aktiviert, die sich in einer Erhöhung der Oberflächenspannung ausdrückt. Durch Umwelteinflüsse, wie z.B. Feuchtigkeit in der Umgebung der Folie und/oder Migration von Gleitmitteln aus der Folie auf die Folienoberfläche, schwindet die Aktivierung/Polarisierung mit der Zeit, d.h. die Oberflächenspannung sinkt wieder, was einer Farb- oder Lackhaftung entgegen wirkt. Speziell die in LDPE vorhandenen Gleitmittel sind dafür verantwortlich, daß zu lackierende oder bedruckende Folien nur begrenzt lagerfähig sind, da diese Gleitmittel die durch das Corona-Verfahren polarisierte Oberfläche mit der Zeit neutralisieren.

Das Verfahren nach EP-A-0277552 zur Herstellung einer Kunststoff-Folie, bei der mindestens eine Oberfläche nach dem Corona-Verfahren behandelt ist, für die Verwendung als bahn- oder haubenförmiges Abdeckmittel, das bei der Durchführung von Lackierarbeiten auf ein Kraftfahrzeug oder einem Teil davon aufzubringen ist, sieht zur Aufrechterhaltung mindestens eines Teils der durch die Corona-Behandlung erzielten Wirkung vor, daß die Stärke der Vorbehandlung so hoch gewählt ist, daß ein Nachlassen der Oberflächeneigenschaften der behandelten Kunststoff-Folie berücksichtigt wird, so daß nach einem Zeitraum von 6 Monaten nach der Behandlung eine Oberflächenspannung von mindestens 45 dyn/cm an der Folienoberfläche auftritt, wobei hierfür auch keine Gewährleistung gegeben ist, daß diese Mindest-Oberflächenspannung gehalten werden kann.

Hinzu kommt, daß LDPE-Folien (Polyethylen niederer Dichte) und LLDPE-Folien (Polyethylen niederer Dichte mit linearer Struktur) geringere Festigkeitswerte aufweisen als HDPE-Folien und nach der Corona-Vorbehandlung eine geringere Oberflächenspannung aufweisen als HDPE-Folien. Darüber hinaus läßt die geringe Rauhtiefe der LDPE-Folien in Verbindung mit dem Corona-Verfahren keine so hohen Oberflächenspannungen entstehen, wie bei der mit einer großen Rauhtiefe von Haus aus ausgestatteten HDPE-Folie in Verbindung mit einer Flamm-Vorbehandlung, die größere Oberflächenspannungen entstehen lassen kann.

Corona-behandelte LDPE-Folien weisen über einen relativ kurzen Zeitraum von Wochen und Monaten einen deutlichen Abfall der Oberfächenspannung aufgrund der aus der LDPE-Folie an die Oberfläche migrierenden Gleitmittel auf. Ebenfalls wichtig bei hohen Trocknungstemperaturen ist der weitaus höhere Schmelzpunkt der HDPE-Folie gegenüber der LDPE-Folie. Hinzu kommt, daß bei der Anwendung des Corona-Verfahrens im beschriebenen Fall hohe Ozonwerte entstehen.

Es ist daher Aufgabe der Vorliegenden Erfindung, eine Kunststoff-Folie mit einer zur Erzielung einer erhöhten Farb-, Lack- und Klebemittelhaftung behandelten Oberfläche mit einer über einen langen Zeitraum anhaltenden, sich nicht verändernden Oberflächenspannung so auszubilden, daß bei einer Verwendung als Abdeckmittel von farbzubehandelnden Flächen unvermeidlich auf das Abdeckmittel aufgesprühte oder aufgetragene Farb- und Lackschichten beim Entfernen nicht abblättern, sondern haften bleiben, auch dann, wenn die Folie einer Faltung oder einem Abknicken unterworfen ist.

Weiterhin soll durch die Oberflächenbehandlung der Kunststoff-Folie eine Polarisierung der Kunststoff-Folienoberfläche für eine größere Haftung auch für Klebemittel erreicht werden, um das Anwendungsgebiet einer derart behandelten Kunststoff-Folie zu erweitern.

Diese Aufgabe wird durch die Verwendung einer Kunststoff-Folie mit den Merkmalen des Anspruches 1 erreicht.

Die Erfindung besteht hiernach in der Verwendung einer einoder beidseitig durch Beflammung unter Überschuß von Sauerstoff, d.h. mit einer sauerstoffreichen Flamme, oberflächenbehandelten Kunststoff-Folie mit erhöhter Farb-, Lack- und Klebemittelhaftung durch Oberflächenpolarisierung durch Anlagerung sauerstoffhaltiger Gruppen (OH,COOH,=C=O), insbesondere als bahn- oder haubenförmiges oder als Formteil ausgebildetes Abdeckmittel für auf einen Untergrund aufzubringendes Auftragsmittel, wie Anstrichfarbe oder -lacke zur Begrenzung von auftragsmittelfreien Flächen.

Besonders vorteilhaft ist der Einsatz einer derart behandelten Kunststoff-Folie bei Lackierarbeiten, für die die Kunststoff-Folien in Bahnen- oder Haubenform oder als Formteil auf diejenigen Flächen von Karosserien oder Karosserieteilen oder anderen zu lackierenden Flächen oder Gegenständen aufgebracht wird, die von einem Lackauftrag ausgenommen werden sollen.

Wesentlicher Vorteil bei der Anwendung dieser Kunststoff-Folie besteht nicht einzig und allein darin, daß der auf die Kunststoff-Folie aufgespritzte oder aufgesprühte Lack an der Folienoberfläche gut haftet und von der Kunststoff-Folie beim Abnehmen vom Karosserieteil nicht abblättert, sondern darin, daß bei oberflächenbehandelten Kunststoff-Folie die an der Folienoberfläche ausgebildete und erhaltene Oberflächenspannung über einen weitaus längeren Zeitraum erhalten bleibt als Folien, die mit dem Corona-Verfahren vorbehandelt werden. Somit erlaubt eine flammenbehandelte Folie wesentlich längere zeitliche Lagerung als coronabehandelte Folien.

Durch die erfindungsgemäße Verwendung einer durch Beflammung oberflächenbehandelten Kunststoff-Folie werden folgende Vorteile erzielt:
- die Kunststoff-Folie aus HDPE weist bei gleicher Folienstärke gegenüber LDPE-/LLDPE-Folien deutlich höhere Festigkeitswerte von bis zu 40% auf
- eine höhere Oberflächenspannung gegenüber coronabehandelten Folien aus LDPE/LLDPE weist die Kunststoff-Folie aus HDPE auf, wodurch eine bessere Farb- und Klebemittelhaftung erreicht wird
- die durch Beflammung behandelte Oberfläche der Kunststoff-Folie ist in Bezug auf die erzielte Wirkung erheblich langlebiger als Oberflächen, die mit dem Corona-Verfahren vorbehandelt wurden
- beim Beflammungsverfahren wird deutlich weniger Ozon gebildet als bei der Corona-Vorbehandlung, so daß dieses Verfahren deutlich umweltverträglicher ist; die bei der Flammbehandlung entstehenden Ozonwerte sind kaum nachweisbar
- aus der Kunststoff-Folie lassen sich neben Hauben- und Abdeckfolien auch Formteile herstellen, die zur Abdeckung von z.B. Spiegeln und Reifen eines Kraftfahrzeuges bei der Durchführung von Lackierarbeiten geeignet sind; auch diese Formteile weisen insbesondere bei der Verwendung einer HDPE-Folie (Polyethylen hoher Dichte) sehr hohe Festigkeitswerte auf
- die Kunststoff-Folie wird auf der Innen- und Außenseite zusätzlich elektrostatisch aufgeladen, wodurch sich die Kunststoff-Folie ohne fremde Hilfe in Folge einer elektrostatischen Anziehung auf dem abzudeckenden Fahrzeug oder auf dessen Teilen oder anderen zu lackierenden Flächen oder Gegenständen wesentlich besser auflegen bzw. bearbeiten läßt. Die erzielte Statik in der Folie erbringt einen Hafteffekt, der selbst bei mehrfacher Anbringung noch wirksam ist
- bezüglich der Handhabung der flammbehandelten Kunststoff-Folie als Abdeckfolie wird gegenüber einer LDPE-/LLDPE-Folie eine bessere Griffigkeit und Verformungsmöglichkeit erreicht; ähnlich dem Papier läßt sich die Kunststoff-Folie aus HDPE mit bleibendem Effekt um einen Gegenstand falten, knicken bzw. wickeln
- durch die Beflammung wird eine größere Oberflächenspannung erreicht, so daß eine bessere Haftung der Farbe eines Farbauftrages oder eines Klebemittels auf der Oberfläche erreicht wird.

Als Abdeckmittel wird bevorzugterweise eine HDPE-Kunststoff-Folie eingesetzt. Die Intensität der Vorbehandlung der Kunststoff-Folie durch die Beflammung ist dabei so gewählt, daß an der Folienoberfläche eine Oberflächenspannung von mehr als 55 dyn/cm erreicht wird. Die verwendete Kunststofffolie setzt sich wie folgt zusammen:
1. 40 - 70 Gew.% HDPE
2. 20 - 45 Gew.% Calciumcarbonat
3. 0 - 5 Gew.% Titandioxid
4. 0 - 15 Gew.% LDPE,
wobei die Summe der Anteile aus 1. bis 4. jeweils 100 Gew.% beträgt.

Die Vorbehandlung der Kunststoff-Folie erfolgt zweckmäßigerweise durch Beflammung, d.h. durch Verbrennen eines Gas-Luftgemisches mit hohem Sauerstoffüberschuß vermittels einer Breitschlitzdüse.

Die eingesetzte Kunststoff-Folie ist auf beiden Seiten zusätzlich durch eine elektrostatiscne Aufladung ausgerüstet, wobei die elektrostatische Aufladung auf der einen Seite der Kunststoff-Folie gegenüber der elektrostatischen Aufladung der anderen Kunststoff-Folienseite größer sein kann.

Zur Erhöhung der Oberflächenspannung und damit zur Haftverbesserung der Oberfläche der Kunststoff-Folie werden eine oder beide bzw. mehrere Oberflächenseiten beflammt. Die Beflammung erfolgt dabei durch Verbrennung eines Gas-Luftgemisches mittels einer Breitschlitzdüse. Durch die Beflammung findet eine chemische Veränderung der Folienoberfläche statt, wobei sich Sauerstoffmoleküle an die Folienoberfläche anlagern. Diese Veränderung wird durch die bei der Verbrennung freiwerdenden Sauerstoffmoleküle hervorgerufen.

In dem Behandlungsbereich der Flamme liegt eine hohe Sauerstoffkonzentration vor, wobei die Verbrennungswärme die chemische Reaktion des Sauerstoffs mit der Polyethylen-Oberfläche auslöst und beschleunigt. Das Beflammen der Kunststoff-Folie zur Oberflächenbehandlung erfolgt zweckmäßigerweise mit einem Gas-Luftgemisch. Wesentlich ist dabei, daß eine hoch-sauerstoff-angereicherte Flamme eingesetzt wird, wobei die Flamme so eingestellt sein sollte, daß der äußere bläuliche Mantel - auch Oxidationsflamme genannt - auf die zu behandelnde Kunststoff-Folie auftrifft, da dieser Bereich der Flamme den höchsten Anteil an überschüssigem Sauerstoff besitzt, so daß dieser Teil der Flamme oxidierend wirkt.

Die Intensität der Beflammung der Kunststoff-Folienoberfläche ist dabei so gewählt, daß sich nach einem Zeitraum von 12 Monaten eine unveränderbare Oberflächenspannung von mindestens 48 dyn/cm einstellt. Nach der Beflammung erfährt die Kunststoff-Folie eine elektrostatische Aufladung, um eine Haftung der Kunststoff-Folie an glatten Oberflächen zu gewährleisten, wobei die elektrostatische Aufladung auf beiden Seiten der Kunststoff-Folie unterschiedliche Intensitäten aufweisen kann.

Die Kunststoff-Folie mit den vorangehend beschriebenen Eigenschaften durchläuft eine Beflammungs-Vorbehandlungseinrichtung, wobei mindestens eine ihrer Oberflächen vorbehandelt wird. Die Intensität der Beflammung der Kunststoff-Folienoberfläche ist dabei so gewählt, daß sich nach einem Zeitraum von 12 Monaten eine unveränderbare Oberflächenspannung von mindestens 48 dyn/cm einstellt. Um die Kunststoff-Folie elektrostatisch aufzuladen, durchläuft die Kunststoff-Folie ein durch einen oder mehrere elektrische Aufladestäbe erzeugtes elektrisches Feld.

Das elektrische Feld wird hervorgerufen durch sogenannte Aufladestäbe. Hierbei entsteht kein Lichtbogen. Die elektrostatische Aufladung bleibt innerhalb des Rollenwickels erhalten. Der Rollenwickel ist der Schutz gegen die Einwirkung zur Entladung führender Umgebungseinflüsse.

## Patentansprüche

1. Verwendung einer ein- oder beidseitig durch Beflammung mit einer auf sich nach einem Zeitraum von 12 Monaten einstellenden unveränderbaren Oberflächenspannung von mindestens 48 dyn/cm eingestellten Beflammungsintensität mittels einer hoch-Sauerstoff-angereicherten Flamme eines Gas-Luftgemisches behandelten und nach der Beflammung mit einer elektrostatischen Aufladung zur Haftung an glatten Oberflächen versehenen Kunststoff-Folie aus einem Polyethylen hoher Dichte (HDPE) mit einer polarisierten Oberfläche und mit einer an der Folienoberfläche liegenden Oberflächenspannung von mehr als 55 dyn/cm sowie mit Hafteigenschaften für Farben und Lacke als als bahn- oder haubenförmiges Formteil ausgebildetes Abdeckmittel gegen auf einen Untergrund aufzubringende Auftragsmittel, wie Anstrichfarben oder Lacke, zur Abdeckung von schützenden Flächen und zur Begrenzung von auftragsmittelfreien Flächen.

2. Verwendung nach Anspruch 1,
wobei die Kunststoff-Folie sich aus:
1) 40-70 Gew.% HDPE
2) 20-45 Gew.% Calciumcarbonat
3) 0 - 5 Gew.% Titandioxid
4) 0 -15 Gew.% LDPE,
zusammensetzt, wobei die Summe der Anteile 1. bis 4. jeweils 100 Gew. % beträgt.

3. Verwendung nach Anspruch 1 oder 2,
wobei die Kunststoff-Folie eine Beflammungs-Vorbehandlungs-Einrichtung durchläuft, wobei mindestens eine ihrer Oberflächen vorbehandelt wird und die Intensität der Beflammung der Kunststoff-Folienoberfläche so gewählt ist, daß sich nach einem Zeitraum von 12 Monaten eine unveränderbare Oberflächenspannung von mindestens 48 dyn/cm einstellt.

4. Verwendung nach einen der Ansprüche 1 bis 3,
wobei die Kunststoff-Folie zur elektrostatischen Aufladung ein durch einen oder mehrere elektrische Aufladesysteme erzeugtes elektrisches Feld durchläuft.

## Claims

1. Use of a plastic film treated on one or on both sides by flaming with a flaming intensity adjusted on an invariable surface tension, which is adjusted after a period of 12 months, of at least 48 dyn/cm by means of a highly enriched oxygen flame of a gas-air mixture and provided, after flaming, with an electrostatic charge for adhering to smooth surfaces, plastic film made of a high-density polyethylene with a polarized surface and with a surface tension on the film surface of more than 55 dyn/cm as well as with adhesive properties for colours and lacquers as a covering means configured as a web shaped or hood-shaped moulded part against coating substances to be coated onto a substrate, like paints or lacquers for masking surfaces to be protected and for limiting surfaces free from coating substance.

2. Use according to claim 1,
the plastic film being composed of:
1) 40 to 70 percent in weight high-density polyethylene
2) 20 to 45 percent in weight calcium carbonate
3) 9 to 15 percent in weight titanium dioxide
4) 9 to 15 percent low-density polyethylene,
whereby the sum of the parts 1 to 4 respectively amounts to 100 percent in weight.

3. Use according to claim 1 or 2,
whereby the plastic film passes through a flaming pretreatment installation, whereby at least one of its upper surfaces is pretreated and the intensity of the flaming of the plastic film upper surface is chosen so that an invariable surface tension of at least 48 dyn/cm is adjusted after a period of 12 months.

4. Use according to one of the claims 1 to 3,
whereby the plastic film passes through an electric field generated by one or several electric charging systems for the electrostatic charging.

## Revendications

1. Utilisation d'un film plastique traité sur un ou sur deux côtés par flambage avec une intensité de flambage réglée sur une tension de surface invariable, qui se règle après une période de 12 mois, d'au moins 48 dyn/cm au moyen d'une flamme fortement enrichie en oxygène d'un mélange de gaz et d'air et pourvu, après flambage, d'une charge électrostatique pour l'adhérence sur des surfaces lisses, film plastique en un polyéthylène à haute intensité (polyéthylène basse pression) avec une surface polarisée et avec une tension de surface située à la surface de la feuille de plus de 55 dyn/cm ainsi qu'avec des propriétés d'adhérence pour des peintures et laques comme élément de recouvrement configuré comme une pièce moulée en forme de feuille continue ou de calotte contre des substances à appliquer devant être appliquées sur un support, comme des peintures ou des laques, pour recouvrir des surfaces à protéger et pour délimiter des surfaces devant rester exemptes de substance à appliquer.

2. Utilisation selon la revendication 1,
le film plastique se composant de
1) 40 à 70 % en poids de polyéthylène basse pression
2) 20 à 45 % en poids de carbonate de chaux
3) de 0 à 5 % d'oxyde de titane
4) de 0 à 15 % de polyéthylène haute pression (basse densité),
la somme des parts 1 à 4 étant respectivement de 100 % en poids.

3. Utilisation selon la revendication 1 ou 2,
le film plastique traversant une installation de traitement préliminaire par flambage, au moins une de ses surfaces supérieures étant traitée de manière préliminaire et l'intensité de flambage de la surface supérieure du film plastique étant choisie de telle manière qu'après une période de 12 mois il se règle une tension de surface invariable d'au moins 48 dyn/cm.

4. Utilisation selon l'une des revendications 1 à 3,
le film plastique traversant, pour la charge électrostatique, un champ électrique produit par un ou plusieurs systèmes de charge électriques.
